# EUROPEAN PATENT APPLICATION

(11) **EP 0 938 220 A2**
(43) Date of publication of application: **25.08.1999**
(21) Application number: 99300603.0
(22) Date of filing: 27.01.1999
(51) Int. Cl.: H04M 1/02, H01R 35/04

(54) **Switch for a foldable telephone equipped with a rotary connector**

(30) Priority: 19.02.1998 JP 3705898
(71) Applicant: ALPS ELECTRIC CO., LTD., Ota-ku Tokyo 145 (JP)
(72) Inventor: Wagatsuma, Toru, Furukawa-shi, Miyagi-ken (JP)
(74) Representative: Kensett, John Hinton

(57) **Abstract**

As a substitute for a microswitch for turning ON and OFF a power supply disposed in a collapsible telephone set bore is provided a switch C equipped with a rotary connector, the switch C having a switch mechanism which is not likely at all to turn from OFF to ON accidentally. The switch mechanism comprises a rotatable connector portion 5 having connector terminals 7a and a switch portion D which is switched over between ON and OFF conditions by rotation of the connector portion 5.

## Description

The present invention relates to a switch equipped with a rotary connector. Particularly, the invention is concerned with a switch equipped with a rotary connector which is suitable for use, for example, in a collapsible telephone set or such an electronic device as a notebook type personal computer.

### Description of the Prior Art

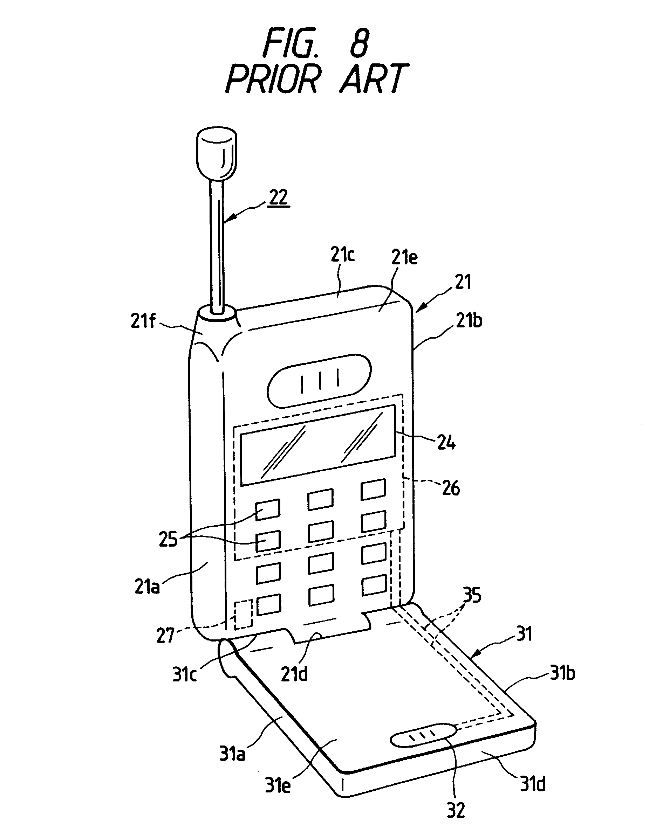

With reference to Fig. 8, a description will be given below of a collapsible telephone set using, that is, a conventional switch applied to an electronic device of the type wherein a flip (lid) is opened and closed.

Fig. 8 is a perspective view of a collapsible telephone set using a conventional switch. As shown in the same figure, the collapsible telephone set has a first case 21 of generally box-shaped serving as a body portion and formed by molding from a synthetic resin and also has a second case 31 of generally box-shaped formed also by molding from a synthetic resin and which is called a flip.

The first case 21 is surrounded on four sides with opposed side walls 21a, 21b and opposed upper and lower walls 21c, 21d and this surrounded space is closed by both a front wall 21e and a back wall (not shown), with a protuberance 21f being projected from an end portion of the upper wall 21c.

Within the first case 21 are disposed a voice signal conversion circuit 26 for converting at least a transmitting aural signal into an electric signal, a pair of connecting wires 35, 35 formed on, that is, a flexible printed circuit board and which inputs a transmitting aural signal to the voice signal conversion circuit 26, and a microswitch 27 for turning on and off a power supply in a power supply circuit (not shown).

In the front wall 21e of the first case 21 are mounted a receiving portion 23 which is a speaker for example, a display portion 24 formed by a liquid crystal display for example, and an operating portion 25 which comprises a plurality of push-button switches for example.

An antenna 22 is constituted of a metallic rod. The antenna 22 is disposed near and along the left-hand side wall 21a and is guided by the protuberance 21f of the first case 21 so that it can be drawn out from the protuberance 21f to the exterior of the first case 21 and can be retracted.

The second case 31 is surrounded on four sides with opposed side walls 31a, 31b and opposed upper and lower walls 31c, 31d and this surrounded space is closed by both a front wall 31e and a back wall (not shown). At a lower end position of the front wall 31e of the second case 31 is disposed a transmitting portion 32 which is a microphone for example. Within the second case 31 are disposed a pair of connecting wires 35, 35 for connection between the transmitting portion 32 and the voice signal conversion circuit 26, the connecting wires 35, 35 being formed on, that is, a flexible printed circuit board in an extended state from the first case 21.

The lower wall 21d of the first case 21 and the upper wall 31c of the second case 31 are connected together in a predetermined manner difficult to be disconnected such as the use of a hinge, so that both cases 21 and 31 can be folded together and hence can be opened and closed without disconnection.

Such a conventional, portable, collapsible telephone set is becoming more and more popular increasingly because the recent demand for the reduction of size and hence ease of carrying and convenience are satisfied. However, this conventional telephone set involves many restrictions in its structure and design because of the need for satisfying predetermined functions, and therefore it has been impossible to replace its flip (lid) freely. It is the present situation that a seal is affixed to the flip which covers the body of the collapsible telephone set or a picture is drawn thereon to distinguish it from another.

According to the construction of this conventional collapsible telephone set, when the second case 31 is slightly opened from its folded or closed state, this slightly opened state is detected and the microphone 27 of the first case 21 turns ON, then this ON condition is detected to turn ON the power supply of the telephone set, thereby bringing the telephone set into an operative condition.

Next, the following description is now provided about a notebook type personal computer (PC) which is an electronic device provided with a folding mechanism though not shown.

The notebook type PC has a first case as a body portion and a second case as a display portion.

In the first case are disposed at least a keyboard, an integrated central processing unit (CPU), a power supply circuit for driving the CPU, and a power switch for turning ON and OFF a power supply in the power supply circuit, while in the second case is disposed a display portion constituted of a liquid crystal display for example.

The CPU disposed in the first case and the display portion disposed in the second case are directly connected together through a connection line such as a flat cable.

For using a notebook type personal computer of such a construction, first in a folded and closed state of the first and second cases, the second case is opened and rotated up to a predetermined angle. Next, the power switch disposed in the first case is operated for switch-over from OFF to ON, allowing the notebook type PC to start operation and become available.

In the above conventional collapsible telephone set and notebook type PC, however, since the voice signal conversion circuit and the CPU in the first case (body portion) and the transmitting portion (microphone) and the display portion in the second case (flip) are directly connected together through a pair of connecting wires formed on a flexible printed circuit board or the like, the second case cannot easily be detached for replacement from the first case. This gives rise to the problem that there is no versatility in design.

The conventional collapsible telephone set involves a further problem such that in the event the second case should be slightly opened, the microswitch in the first case turns ON, and if this slightly opened state is continued, in other words, if a power-applied state is continued despite the telephone set is not in use, the power supply is wasted.

The conventional notebook type PC involves a still further problem that the number of operating steps increases. This is because it is necessary to operate the power switch after opening the second case when the PC is to be used.

The present invention solves the above-mentioned problems and it is an object of the invention to provide a switch equipped with a rotary connector which is suitable for use, for example, in a collapsible telephone set or such an electronic device as a notebook type PC.

The switch equipped with a rotary connector according to the present invention has a connector portion of a rotary type and a switch portion which is switched over between ON and OFF conditions by rotation of the connector portion, the connector portion having a connector terminal.

Preferably, the connector portion comprises a rotatable holding member formed of an insulating material, a connector terminal attached to the holding member, and a movable contact formed on the back of the holding member in a connected state to the connector terminal, the switch portion comprises the movable contact provided in the connector portion and an insulating board having a contact which comes into contact with and away from the movable contact, further, a frame for holding the holding member rotatably is provided, and the switch portion is switched over between ON and OFF conditions by rotation of the holding member.

Preferably , a mounting member for holding the insulating board is provided and is combined with the frame to conjointly cover the insulating board.

Preferably, the switch portion comprises a first switch portion and a second switch portion, the first switch portion comprising a first movable contact provided in the connector portion and a first contact adapted to come into contact with and away from the first movable contact, the second switch portion comprising a rotating member, a second movable contact provided in the rotating member, and a second contact adapted to come into contact with and away from the second movable contact, the first switch portion being switched over between ON and OFF conditions by rotation of the connector portion, and the rotating member being rotated by the connector portion to switch over the second switch portion between ON and OFF conditions.

Preferably, there are provided a rotatable holding member formed of an insulating material and provided with the first movable contact and a shaft, and an insulating board having a hole, with the first contact being attached to the insulating board, the shaft being projected through the hole of the insulating board, and the rotating member is rotated by the shaft thus projected.

Preferably, there are provided a mounting member for holding both a first insulating board with the first contact attached thereto and a second insulating board with the second contact attached thereto, and a frame for covering the first and second insulating boards from above, the mounting member being combined with the frame to conjointly cover the first and second insulating boards.

Embodiments of the invention will now be described, by way of example only, with reference to the accompanying drawings, in which:
Fig. 1 is a perspective view of a switch equipped with a rotary connector according to the first embodiment of the present invention;
Fig. 2 is a front view thereof;
Fig. 3 is an exploded perspective view thereof;
Fig. 4 is a perspective view of a housing of the switch shown in Fig. 3;
Fig. 5 is a perspective view of a switch equipped with a rotary connector according to the second embodiment of the present invention;
Fig. 6 is an exploded perspective view thereof;
Fig. 7 is an exploded perspective view of a collapsible telephone set using the switch of the first embodiment; and
Fig. 8 is a perspective view of a collapsible telephone set using a conventional switch.

Switches each equipped with a rotary connector according to embodiments of the present invention will be described hereinunder with reference to the accompanying drawings.

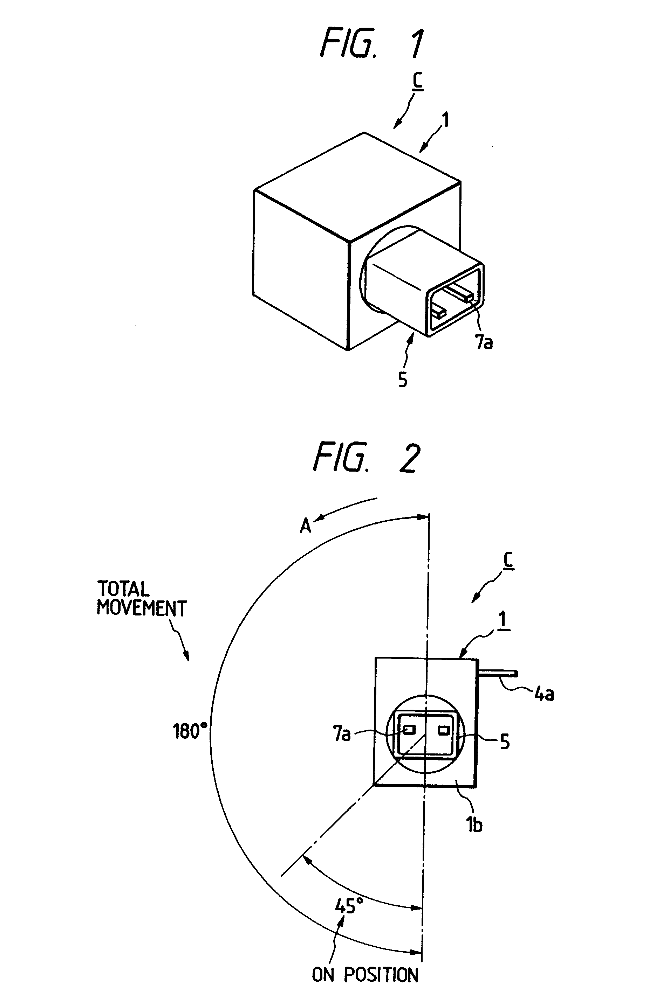

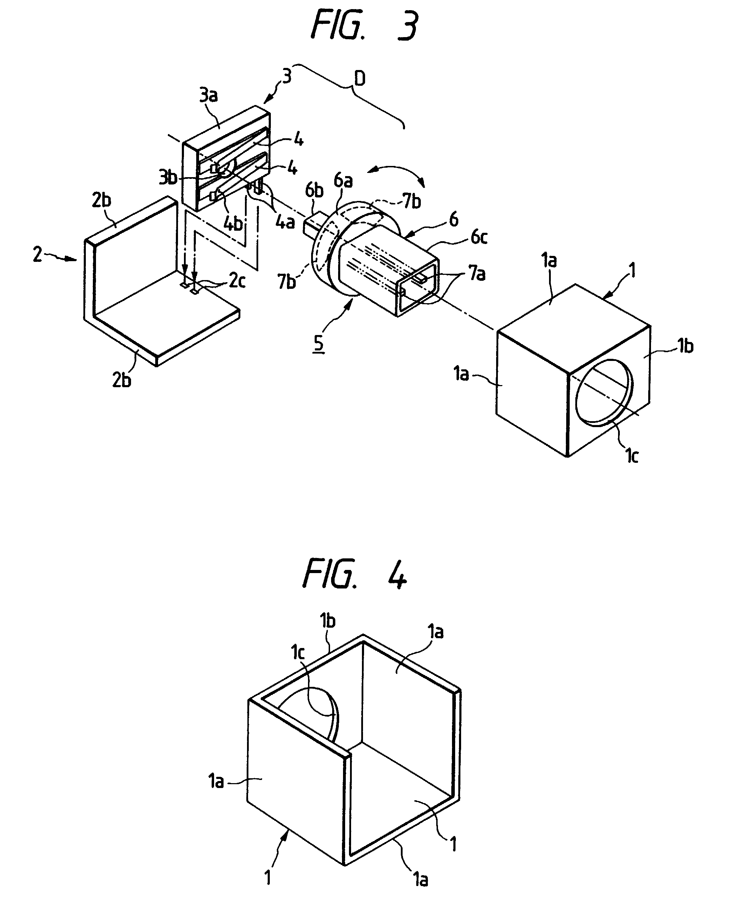

Fig. 1 is a perspective view of a switch equipped with a rotary connector according to an embodiment of the present invention, Fig. 2 is a front view thereof, Fig. 3 is an exploded perspective view thereof, and Fig. 4 is a perspective view of a frame used in the switch shown in Fig. 3.

As shown in Fig . 1 to 4, the frame 1 is formed generally in a rectangular shape in section by cutting and bending a metallic plate. The frame 1 comprises side walls la assembled in U shape and a front wall 1b which connect the side walls la with one another and which has a circular hole lc formed in a nearly central position. Both underside and rear side of the frame 1 are open.

A mounting member 2 is formed generally in a L shape by molding an insulative synthetic resin material. It has a rectangular rear wall 2a, a lower wall 2b formed in a direction orthogonal to the rear wall 2a, and a plurality (for example, two) of rectangular apertures 2c, 2c formed in one side end of the lower wall 2b.

The mounting member 2 is connected to the frame 1 so that its rear wall 2a and lower wall 2b close the openings of the frame 1.

An insulating board 3 has a contact receptacle 3a formed generally in a rectangular shape by molding an insualtive synthetic resin material and a circular hole 3b formed nearly centrally of the contact receptacle 3a.

A pair of contacts 4 are each formed by a metallic plate having elasticity and are disposed on the front side of the contact receptacle 3a. An intermediate portion of each contact 4 is embedded in the contact receptacle 3a by insert molding, with a terminal 4a being provided at one end portion of each contact 4 and a contact piece 4b being provided at the opposite end which is a free end. The terminal 4a is projected outward from a lower end face of the contact receptacle 3a.

The insulating board 3 is positioned in an overlapped state with respect to the rear wall 2a of the mounting member 2 and the terminals 4a, 4a of the contacts 4 are inserted through the apertures 2c, 2c of the mounting member 2 and are projected outwards. In this state, the lower end face of the insulating board 3 is disposed on the lower wall 2b of the mounting member 2.

A connector portion 5 is provided with a holding member 6 formed by molding an insulative synthetic resin material, male type connector terminals 7a attached to the holding member 6, and movable contacts 7b formed on the back of the holding member 6 in a connected state to the connector terminals 7a.

The holding member 6 comprises a disc-like flange 6a, a rectangular shaft 6b disposed centrally on one plane (back) side of the flange 6a and projected outward, and a cylindrical portion 6c disposed on the opposite plane (front) side of the flange 6a and projected outward, the cylindrical portion 6c being in the shape of a rectangular parallelepiped and having an open front end.

The male type connector terminals 7a are disposed within the cylindrical portion 6c, and the movable contacts 7b are disposed in a generally sectorial shape along the peripheral edge portion of the back side of the flange 6a.

The cylindrical portion 6c of the holding member 6 is inserted through the hole lc formed in the front wall 1b of the frame 1 and is projected outward from the frame 1. The shaft 6b of the holding member 6 is inserted into the hole 3b of the insulating board 3. In this state, the connector portion 5 is rotatable in a predetermined rotational range with respect to the frame 1.

The paired movable contacts 7b, 7b disposed on the flange 6a of the holding member 6 and the paired contacts 4, 4 disposed on the insulating board 3 side are opposed to each other.

In this state, when the movable contacts 7b, 7b of the connector portion 5 are rotated to a predetermined rotational angle (135° for example) relative to the contact pieces 4b, 4b of the contacts 4, 4 formed on the insulating board 3, the contact pieces 4b, 4b and the movable contacts 7b, 7b are respectively contacted with each other, so that there is made switch-over from OFF to ON. The connector portion 5 can rotate (up to 180° for example) and in its rotated state the ON condition is maintained. If in this state the connector portion 5 is rotated back toward its original position, then at a predetermined rotational angle the movable contacts 7b, 7b leave the contact pieces 4b, 4b, so that there is made switch-over from ON to OFF.

A switch portion D of the switch equipped with a rotary connector and indicated at C is composed of the movable contacts 7b provided in the connector portion 5 and the insulating board 3 provided with contacts 4 which are adapted to come into contact with and away from the movable contacts 7b.

As noted above, the switch C equipped with a rotary connector is made up of the connector portion 5 of a rotary type having the connector terminals 7a and the switch portion D. The insulating board 3, the movable contacts 7b and the contacts 4 are covered with the frame 1 and the mounting member 2.

The operation of the switch C equipped with a rotary connector will be described below.

As shown in Fig. 2, the switch C equipped with a rotary connector being considered is constituted in such a manner that the connector portion 5 rotates in a predetermined rotational range relative to the frame 1. For example, in a rotational range of 0° to about 135°, the switch portion D of the switch C is OFF and the movable contacts 7b of the connector portion 5 and the contacts 4 on the insulating board 3 are spaced away from each other, then in the next rotational range of about 135° to about 180°, the switch portion D turns ON and the movable contacts 7b of the connector portion 5 and the contacts 4 of the insulating board 3 come into connection with each other.

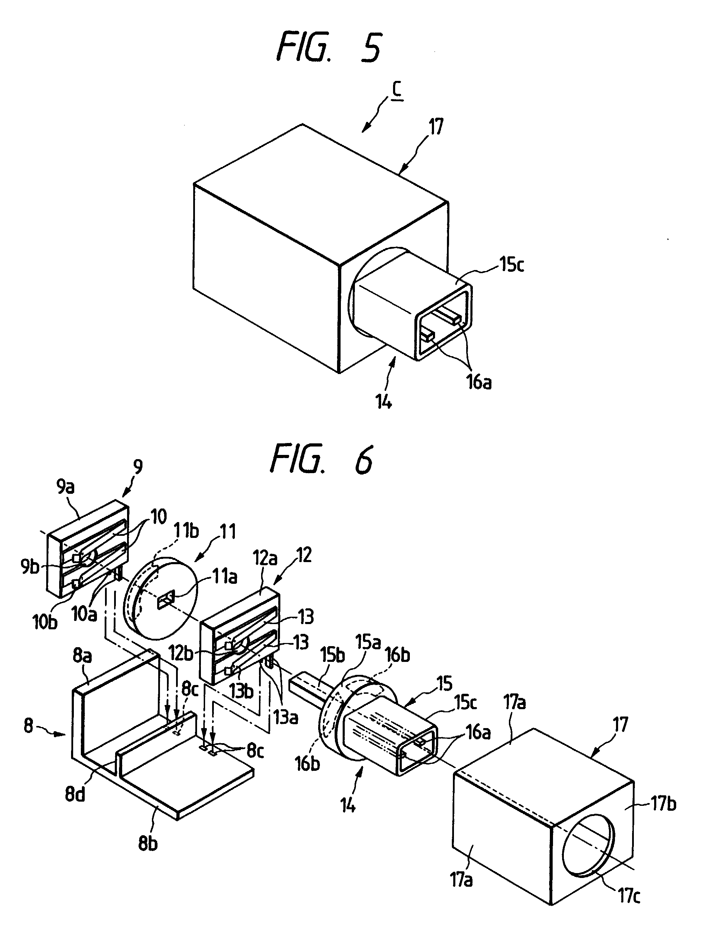

Next, a description will now be given of a switch equipped with a rotary connector according to the second embodiment of the present invention. Fig. 5 is a perspective view of a switch equipped with a rotary connector according to the second embodiment of the present invention, and Fig. 6 is an exploded perspective view thereof. In this second embodiment, a switch portion is of a two-stage (two-circuit) configuration, different from the above first embodiment in which the switch portion is of a one-stage (one-circuit) configuration. But both are basically the same.

As shown in Fig . 5 and 6, the switch of this embodiment has a switch portion of a two-stage (two-circuit) configuration, in which a frame is formed longer in the front-rear direction than in the above first embodiment.

The frame, indicated at 17, is formed generally in a rectangular shape in section by cutting and bending a metallic plate. It has side walls 17a assembled together in U shape and a front wall 17b which connects the side walls 17a with one another and which has a circular hole 17c formed nearly centrally. The frame 17 is open on both underside and rear side thereof.

A mounting member 8 is formed generally in a L shape by molding an insulative synthetic resin material. It has a rectangular rear wall 8a, a lower wall 8b formed in a direction orthogonal to the rear wall 8a, and a partition wall 8d which is parallel to the rear wall 8a and which is projected upward from an intermediate position of the lower wall 8b. In one side end of the lower wall 8b and on both sides of the partition wall 8d are formed a plurality (for example, two each) of apertures 8c. The partition wall 8d is formed lower than the height of the rear wall 8a.

The mounting member 8 is connected to the frame 17 in such a manner that the open sides of the frame 17 are closed by the rear wall 8a and the lower wall 8b.

A second insulating board 9 has a contact receptacle 9a formed generally in a rectangular shape by molding an insulative synthetic resin material and a circular hole 9b formed nearly centrally of the contact receptacle 9a.

A pair of second contacts 10 are each formed by a metallic plate having elasticity and are disposed on the front side of the contact receptacle 9a. An intermediate portion of each contact 10 is embedded in the contact receptacle 9a by insert molding, with a terminal 10a being provided at one end portion of each contact 10 and a contact piece 10b being provided at the opposite end which is a free end. The terminal 10a is projected outward from a lower end face of the contact receptacle 9a.

The second insulating board 9 is positioned in an overlapped state with respect to the rear wall 8a of the mounting member 8 and the terminals 10a, 10a of the second contacts 10, 10 are inserted through the associated apertures 8c, 8c of the mounting member 8 and are projected outward. In this state, the lower end face of the second insulating board 9 is disposed on the lower wall 8b of the mounting member 8.

A rotating member 11 is formed in a disc shape by molding an insulative synthetic resin material, with a rectangular hole lla being formed nearly centrally of the rotating member 11. Further, a second movable contact llb of a generally sectorial shape formed by a metallic plate is disposed along the peripheral edge portion of the plane side (back side) of the rotating member 11.

The second movable contact llb of the rotating member 11 is opposed to the second contacts 10 on the second insulating board 9 so as to come into contact with and away from the second contacts 10 with rotation of the rotating member 11.

A second switch portion is formed by the rotating member 11, the second movable contact llb of the rotating member 11 and the second contacts 10 adapted to contact and leave the second movable contact llb.

As to a first insulating board 12, a detailed explanation thereof is here omitted because the construction thereof is the same as that of the second insulating board 9 described above.

The first insulating board 12 has a contact receptacle 12a and a hole 12b.

A pair of contacts 13 are each provided with a terminal 13a and a contact piece 13b, and an intermediate portion of each contact 13 is embedded in the contact receptacle 12a of the first insulating board 12.

The first insulating board 12 is lapped on the partition wall 8d in parallel with the rear wall 8a of the mounting member 8 and the terminals 13a, 13a of the first insulating board 12 are inserted into the associated holes 8c, 8c of the mounting member 8. In this state, the lower end face of the first insulating board 12 is disposed on the lower wall 8b of the mounting member 8.

A connector portion 14 is provided with a holding member 15 formed by molding an insulative synthetic resin material, connector terminals 16a of a male type secured to the holding member 15, and first movable contacts 16b formed on the back of the holding member 15 in a connected state to the connector terminals 16a.

The holding member 15 comprises a disc-like flange 15a, a shaft 15b of a rectangular section disposed centrally on the back side of the flange 15a and projected outward, and a cylindrical portion 15c disposed on the front side of the flange 15a and projected outward, the cylindrical portion 15c being in the shape of a rectangular parallelepiped having an open front end.

The connector terminals 16a of a male type are received within the cylindrical portion 15c, and the first movable contacts 16b are disposed in a generally sectorial shape along the peripheral edge on the back side of the flange 15a.

The cylindrical portion 15c of the holding member 15 is inserted through the hole 17c formed in the front wall 17b of the frame 17 and is projected to the exterior from the frame. In this state, the connector portion 14 is rotatable in a predetermined rotational range relative to the frame 17.

The shaft 15b of the holding member 15 is formed longer than the shaft 6b of the connector portion 5 of the switch equipped with a rotary connector in the foregoing first embodiment.

The shaft 15b of the holding member 15 is inserted through all of the hole 12b of the first insulating board 12, the hole lla of the rotating member 11 and the hole 9b of the second insulating board 9 so that the rotating member 11 is rotated with rotation of the holding member 15 in the connector portion 14.

Moreover, with rotation of the holding member 15, the first movable contacts 16b disposed on the back side of the flange 15a of the holding member and the first contacts 13 disposed in the first insulating board 12 come into contact with and away from each other. A first switch portion is constituted of both such first movable contacts 16b and first contacts 13.

The switch equipped with a rotary connector of the above construction is provided with the mounting member 8 which holds the first and second insulating boards 12, 9 and is also provided with the frame 17 which cover the first and second insulating boards from above. The mounting member 8 and the frame 17 are coupled together to conjointly cover the first and second insulating boards 12, 9.

Further, the switch equipped with a rotary connector of the above construction is provided with the connector portion 14, the first switch portion which is switched over between ON and OFF conditions by rotation of the first connector portion 14, and the second switch portion which is switched over between ON and OFF conditions also by rotation of the first connector portion 14. When the first movable contacts 16b of the connector portion 14 are rotated to a predetermined rotational angle (120° for example), the first movable contacts 16b and the first contacts 13 are abutted against each other, and the rotating member 11 is rotated with such rotation of the connector portion 14. As a result, the second movable contact llb of the rotating member 11 and the second contacts 10 are brought into contact with each other and are each switched over from OFF to ON. The connector portion 14 can further rotate (for example, up to 180°) and thereafter the ON condition is maintained. In this state, if the connector portion 14 is rotated back toward its original position, then at a predetermined rotational angle the first movable contacts 16b and the first contacts 13 come away from each other, and likewise the second movable contact llb and the second contact 10 come away from each other. In this way there is made switch-over from ON to OFF.

Although in the above embodiments contacts are disposed on the insulating board side, this constitutes no limitation. For example, contacts may be disposed on the rear wall of the mounting member or on the partition wall.

Although in the above second embodiment contacts are disposed on one surface of each insulating board, there is made no limitation thereto. For example, the first contacts 13 and the second contacts 10 may be disposed respectively on both sides (front and rear) of the first insulating board 12.

The operation of the switch equipped with a rotary connector according to this second embodiment is basically the same as that of the like switch C in the previous first embodiment, so an explanation thereof is here omitted.

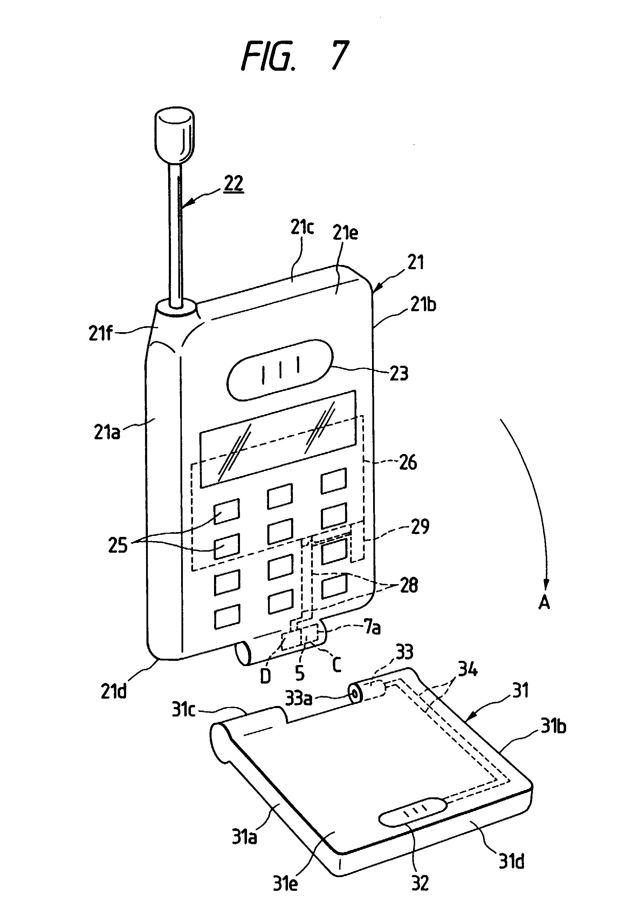

Next, with reference to Fig. 7, a description will be given below of a collapsible telephone set using the switch C of the above first embodiment. Fig. 7 is an exploded perspective view of a collapsible telephone set using such perspective view of a collapsible telephone set using such switch C embodying the invention.

As shown in Fig. 7, the collapsible telephone set comprises a first case 21 of generally box-shaped serving as a body portion and formed by molding from a synthetic resin, and a second case 31 of generally box-shaped called flip (lid) for example and formed also by molding from a synthetic resin.

The first case 21 is surrounded on four sides with opposed side walls 21a, 21b and opposed upper wall 21c and lower wall 21d and the thus-surrounded space is closed by a front wall 21e and a back wall (not shown).

Within the first case 21 are disposed a voice signal conversion circuit 26 for converting at least a voice signal into an electric signal; a switch C equipped with a rotary connector, the switch C having a connector portion 5 of a rotary type and a switch portion D, the first connector portion 5 having male type connector terminals 7a; a pair of connecting wires 28, 28 for connecting the voice signal conversion circuit 26 electrically with the switch portion D of the switch C equipped with a rotary connector, the connecting wires 28, 28 being constituted of, that is, copper foil formed on a flexible printed circuit board or the like; and a power supply circuit 29 for driving the voice signal conversion circuit 26.

In the front wall 21e of the first case 21 are disposed a receiving portion 23 which is, that is, a speaker, a display portion 24 constituted of a liquid crystal display for example, and an operating portion 25 which, for example, comprises a plurality of push-button switches.

The switch C equipped with a rotary connector is mounted near the lower wall 21d of the first case 21 in an exposed state of the connector terminals 7a of the connector portion 5 from the lower wall 21d.

An antenna 22, which is constituted of a metallic rod, is disposed near and along the left-hand side wall 21a so that it can be drawn out from a protuberance 21f of the first case 21 to the exterior of the first case while being guided by the protuberance 21f and can also be retracted.

The second case 31 is surrounded on four sides with opposed side walls 31a, 31b and opposed upper wall 31c and lower wall 31d and the thus-surrounded space is closed by a front wall 31e and a back wall (not shown). At a lower end portion of the front wall 31e of the second case 31 is disposed a transmitting portion 32 which is, that is, a microphone for the transmission of a voice signal, while in the vicinity of the upper wall 31c is disposed a connector portion 33 having female type connector terminals 33a. Within the second case 31 are disposed a pair of second connecting wires 34, 34 for sending the voice signal from the transmitting portion 32 to the second connector portion 33, the second connecting wires 34, 34 being constituted of, that is, copper foil formed on a flexible printed circuit board or the like.

The lower wall 21d of the first case 21 and the upper wall 31c of the second case 31 are connected together in a desired manner permitting easy disconnection for replacement such as a snap-in method or a fixing method using screw capable of being removed. Both cases 21 and 31 can be folded in two, that is, can be opened and closed, with the lower and upper walls 21d, 31c as a fulcrum of rotation.

In this case, the connector portion 5 of the switch equipped with a rotary connector disposed in the first case 21 and the connector portion 33 of the second case 31 are connected together in a disconnectable manner, and a rotational axis of one connector portion 5 and the other 33 in this connected state lies in a rotational axis about which the first and second cases 21, 31 are opened and closed in a collapsible manner.

With the lower wall 21d of the first case 21 and the upper wall 31c of the second case 31 connected together, if the connector terminals 7a of the connector portion 5 in the switch C equipped with a rotary connector are inserted (connected) into the connector terminals 33a of the connector portion 33 and if the first and second cases 21, 31 are in a closed state, the switch portion D of the switch C is OFF.

As described above, the switch C equipped with a rotary connector is incorporated in the first case 21, while the connector portion 33 is incorporated in the second case 31, and the connector portions 5 and 33 are connected together upon combining of both first and second cases 21, 31, whereby the collapsible telephone set being considered is constituted. The operation of this collapsible telephone set will be described below.

When the collapsible telephone set is not in use, the antenna 22 is stowed within the first case 21, the first and second cases 21, 31 are folded together and the respective front walls 21e and 31e are combined and kept closed. In this state, the switch C disposed in the first case 21 is OFF.

When the collapsible telephone set is to be used, the antenna 22 stowed in the first case 21 is drawn out to the exterior and the folded (closed) second case 31 is rotated, that is, for example 180° in the direction of arrow A and is thereby opened from the first case 21. With this rotation of the second case 31, the connector portion 33 of the second case is rotated, and this rotation of the connector portion 33 causes rotation of the connector portion 5 of the switch C disposed in the first case 33 which is connected to the connector portion 33. When the connector portion 5 rotates, that is, about 135° or more, the switch portion D of the switch C is switched over from OFF to ON.

With the switch portion D of the switch C ON, the voice signal conversion circuit 26 disposed in the first case 21 and the transmitting portion 32 disposed in the second case 31 are electrically connected with each other through the interconnected connector portion 5 of a male type and the connector portion 33 of a female type.

In the collapsible telephone set thus switched over to ON, the power supply circuit 29 turns ON upon detection of the switch-over to ON of the switch portion D, so that the telephone set is kept employable.

The following description is now provided about a collapsible telephone set using the switch with a rotary connector described in the above second embodiment.

The switch equipped with a rotary connector according to the foregoing second embodiment of the invention, which is used in the collapsible telephone set about to be described, is basically the same as the switch C of the foregoing first embodiment which is incorporated in the previous collapsible telephone set, so a detailed description thereof is here omitted.

The first switch portion in the switch with a rotary connector used in this collapsible telephone set is disposed for making and breaking the connection between the voice signal conversion circuit in the first case and the transmitting portion in the second case, while the second switch portion is disposed for turning ON and OFF the power supply circuit in the first case.

Although the rotational angle at which the switch portion D turns ON with rotation of the connector portion 5 has been described as about 135° or about 120° in the foregoing first and second embodiments, there is made no limitation to such rotational angles. The movable contacts may be disposed so that the switch portion switches over from OFF to ON at a desired -rotational angle.

Next, the following description is provided about an example in which the switch equipped with a rotary connector according to the present invention is applied to a notebook type personal computer (PC).

Though not shown, the notebook type PC has a first case as a body portion and a second case as a display portion.

In the first case are disposed at least a keyboard, an integrated central processing unit (CPU), a power supply circuit for driving the CPU, and a switch equipped with a rotary connector, the switch having a connector portion of a rotary type and switch portion which is switched over between ON and OFF conditions by rotation of the connector portion to turn ON and OFF a power supply included in the power supply circuit. In the second case are disposed a display portion constituted of a liquid crystal display for example and a connector portion which is connected to the connector portion of the switch equipped with a rotary connector.

The CPU and the display portion disposed in the first and second cases respectively are electrically connected with each other through the respective connector portions.

The first and second cases are connected with each other in a desired manner permitting disconnection and replacement. With both cases interconnected, the connector portion of the switch equipped with a rotary connector and the connector portion disposed in the second case are connected with each other.

When this notebook type PC is to be used, the second case is opened from its closed state, whereby the connector portion in the second case rotates and the connector portion of the switch equipped with a rotary connector, which is connected to the former connector portion, is rotated, so that the switch portion is switched over to turn the power supply in the power supply circuit from OFF to ON. The notebook type PC is now ready for use.

As set forth above, the switch equipped with a rotary connector according to the present invention has a connector portion of a rotary type and a switch portion which is switched over between ON and OFF conditions by rotation of the connector portion, the connector portion having a connector terminal. Thus, since the switch of the invention is provided with a combined mechanism of both a connector mechanism of a rotary type and a switch mechanism which is switched over between ON and OFF conditions by rotation of the connector mechanism, there is attained the effect that the switch portion can be switched over by only rotating the connector portion.

In the switch equipped with a rotary connector according to the present invention, the connector portion comprises a rotatable holding member formed of an insulating material, a connector terminal attached to the holding member, and a movable contact formed on the back of the holding member in a connected state to the connector terminal, the switch portion comprises the movable contact provided in the connector portion and an insulating board having a contact which comes into contact with and away from the movable contact, further, a frame for holding the holding member rotatably is provided. Thus, the switch is assembled using a small number of components and so can be provided at low cost.

In the switch equipped with a rotary connector according to the present invention, since a mounting member for holding the insulating board is provided and is combined with the frame to conjointly cover the insulating board, the dust-proofing effect for the contacts on the insulating board is improved.

In the switch equipped with a rotary connector according to the present invention, the switch portion comprises a first switch portion and a second switch portion, the first switch portion comprising a first movable contact provided in the connector portion and a first contact adapted to come into contact with and away from the first movable contact, the second switch portion comprising a rotating member, a second movable contact provided in the rotating member, and a second contact adapted to come into contact with and away from the second movable contact, the first switch portion being switched over between ON and OFF conditions by rotation of the connector portion, and the rotating member being rotated by the connector portion to switch over the second switch portion between ON and OFF conditions. Consequently, the number of switching contacts increases and this makes it possible to surely switch over from one to another function selected from various functions.

In the switch equipped with a rotary connector according to the present invention, there are provided a rotatable holding member formed of an insulating material and provided with the first movable contact and a shaft, and an insulating board having a hole, with the first contact being attached to the insulating board, the shaft being projected through the hole of the insulating board, and the rotating member is rotated by the shaft thus projected. Since the switch is thus assembled using a small number of components, it can be provided at low cost.

Further, in the switch equipped with a rotary connector according to the present invention, there are provided a mounting member for holding a first insulating board with the first contact attached thereto and a second insulating board with the second contact attached thereto, and a frame for covering the first and second insulating boards from above, the mounting member being combined with the frame to conjointly cover the first and second insulating boards. Therefore, the dust-proofing effect for the first and second contacts on the first and second insulating boards is improved.

## Claims

1. A switch equipped with a rotary connector, comprising a connector portion of a rotary type and a switch portion which is switched over between ON and OFF conditions by rotation of said connector portion, said connector portion having a connector terminal.

2. A switch equipped with a rotary connector according to claim 1, wherein:
said connector portion comprises a rotatable holding member formed of an insulating material, said connector terminal which is attached to said holding member, and a movable contact formed on the back of said holding member in a connected state to said connector terminal;
said switch portion comprises said movable contact provided in said connector portion and an insulating board having a contact which comes into contact with and away from said movable contact;
a frame for holding said holding member rotatably is provided; and
said switch portion is switched over between ON and OFF conditions by rotation of said holding member.

3. A switch equipped with a rotary connector according to claim 2, wherein a mounting member for holding said insulating board is provided and is combined with said frame to conjointly cover said insulating board.

4. A switch equipped with a rotary connector according to claim 1, wherein:
said switch portion comprises a first switch portion and a second switch portion;
said first switch portion comprising a first movable contact provided in said connector portion and a first contact adapted to come into contact with and away from said first movable contact;
said second switch portion comprising a rotating member, a second movable contact provided in said rotating member, and a second contact adapted to come into contact with and away from said second movable contact;
said first switch portion being switched over between ON and OFF conditions by rotation of said connector portion; and
said rotating member being rotated by said connector portion to switch over said second switch portion between ON and OFF conditions.

5. A switch equipped with a rotary connector according to claim 4, wherein there are provided a rotatable holding member formed of an insulating material and an insulating board, said rotatable holding member having a shaft and with said first movable contact attached thereto, said insulating board having a hole and with said first contact attached thereto, said shaft being projected through said hole of said insulating board, and said rotating member is rotated by said shaft thus projected.

6. A switch equipped with a rotary connector according to claim 4, wherein there are provided a mounting member for holding both a first insulating board with said first contact attached thereto and a second insulating board with said second contact attached thereto, and a frame for covering said first and second insulating boards from above, said mounting member being combined with said frame to conjointly cover said first and second insulating boards.
